# EUROPÄISCHE PATENTSCHRIFT

(11) **EP 4 616 134 B1**
(45) Veröffentlichungstag und Bekanntmachung des Hinweises auf die Patenterteilung: **14.10.2026**
(21) Anmeldenummer: 23801738.8
(22) Anmeldetag: 06.11.2023
(51) Int. Cl.: F27B 7/00, F27B 7/36, F27B 7/38, F27D 17/00, C04B 7/43, F27B 7/02, F27B 7/20, C04B 7/44

(54) **VERFAHREN ZUM BETRIEB EINES VERSCHWELUNGSOFENS**
METHOD FOR OPERATING A CARBONISATION FURNACE
PROCÉDÉ DE FONCTIONNEMENT D'UN FOUR DE CARBONISATION

(30) Priorität: 07.11.2022 DE 102022129317
(43) Veröffentlichungstag der Anmeldung: 17.09.2025
(73) Patentinhaber: KHD Humboldt Wedag GmbH, 51149 Köln (DE)
(72) Erfinder: SCHMITGEN, Sven, 53489 Sinzig (DE)
(86) Internationale Anmeldenummer: PCT/EP2023/080849
(87) Internationale Veröffentlichungsnummer: WO 2024/099973

(56) Entgegenhaltungen:
- WO-A1-2021/104766
- US-B2- 6 468 075
- US-B2- 6 626 662

## Beschreibung

Die Erfindung betrifft ein Verfahren zum Betrieb eines Verschwelungsofens in einer Anlage zur Herstellung von Zementklinker, aufweisend mindestens einen Drehrohrofen zum Sintern von Zementklinker, mindestens einen, dem Drehrohrofen im Materialfluss nachgeschalteten Klinkerkühler und mindestens einen Verschwelungsreaktor, in welchem Verschwelungsreaktor feste Sekundärbrennstoffe zum Erzeugen von Kohlenmonoxid (CO) im Gleichstromverfahren verschwelt werden.

Zur Herstellung von Zementklinker im sogenannten Trockenverfahren wird ein Mehl aus silikathaltigem Gestein und aus karbonathaltigem Gestein zunächst in einem Wärmetauscher erwärmt und anschließend in einem Calcinator einer Wärmebehandlung unterzogen, um Kohlendioxid (CO₂) aus dem karbonathaltigen Gestein thermisch auszutreiben, wobei aus dem karbonathaltigen Gestein ungelöschter Kalk oder Calciumoxid (CaO) entsteht. Anschließend wird das wärmebehandelte Gesteinsmehl in einem Drehrohrofen bei ca. 1.450°C in einer oxidativen Gasumgebung zu Zementklinker gesintert. Sowohl im Drehrohrofen als auch im Calcinator entstehen Stickoxide (NOₓ) durch Verbrennung von sogenanntem Brennstoffstickstoff, nämlich im Brennstoff chemisch in der Regel als Amin (R-NH₂) gebundener Stickstoff, und durch Verbrennung von sogenanntem Luftstickstoff, nämlich den in der atmosphärischen Luft vorhandenen elementaren Stickstoff (N₂). Um diese Stickoxide (NOₓ) in der Anlage zur Herstellung von Zementklinker wieder zu elementarem Stickstoff (N₂) zu reduzieren, ist man dazu übergegangen, Kohlenmonoxid (CO) in den Calcinator zu leiten und somit eine gestufte Verbrennung durchzuführen. Die Stufen entstehen durch eine oxidative Umgebung im Drehrohrofen und in der Nähe des Drehrohrofenkopfes und in Teilen des Calcinators. Darauf folgt eine reduzierende Umgebung durch das Einströmen von Kohlenmonoxid (CO). Stickoxide (NOₓ), die in der oxidativen Umgebung des Drehrohrofens entstanden sind, wird hier die Möglichkeit gegeben, mit Kohlenmonoxid (CO) zu reagieren, wobei im Idealzustand Kohlendioxid (CO₂) und elementarer Stickstoff (N₂) entsteht. Die gestufte Verbrennungsführung im Calcinator, der selbst ein Flugstromreaktor für das zu entsäuernde Gesteinsmehl ist, ist nicht einfach zu kontrollieren. Gassträhnen bilden sich im Calcinator nicht stabil aus und es können Verwirbelungen entstehen. Eine stabile, laminare Strömung wird durch das suspendierte Gesteinsmehl immer wieder gestört. Folglich ist es notwendig, mit einem hohen Kohlenmonoxidüberschuss zu arbeiten, um die Stickoxide (NOₓ) sicher und quantitativ zu reduzieren. Dabei entsteht wiederum ein unerwünschter Kohlenmonoxidschlupf. Es wäre wünschenswert, wenn die reduktive Umgebung in der gestuften Verbrennungsführung reaktiver wäre, so dass der Ausbrand von Stickoxiden (NOₓ) mit einem geringeren Überschuss von Kohlenmonoxid (CO) stattfinden kann.

Aus der Druckschrift WO 2021/104766 A1 ist eine Anlage zur Herstellung von Zementklinker bekannt, bei der ein Drehrohrofen zum Sintern mit einem separaten Drehtrommelreaktor zur Verschwelung von Sekundärbrennstoffen kombiniert ist. Der Drehtrommelreaktor ist dabei so ausgebildet, dass Gas- und Feststoffströme im Gegenstrom geführt werden. Durch diese Verfahrensweise sollen insbesondere unsortierte Sekundärbrennstoffe verschwelt und ein Pilotbrenner entbehrlich gemacht werden.

Die US-Patentschrift US 6,626,662 B2 offenbart ein Verfahren zur Herstellung von Zementklinker mit einem zusätzlichen Drehtrommelreaktor, in dem Sekundärbrennstoffe im Gleichstrom zusammen mit einem Teilstrom Tertiärluft und einem Teilstrom Rohmehl behandelt werden. Das Rohmehl dient dabei einer gleichmäßigen Wärmeübertragung und Temperaturstabilisierung im Reaktor, während die zugeführte Tertiärluft die Verbrennung der Sekundärbrennstoffe unterstützt.

Die US-Patentschrift US 6,468,075 B2 beschreibt eine Vorrichtung mit einem sogenannten Strähnencalcinator, in dem ein DeNOx-Brenner zur Bildung einer COhaltigen Reduktionszone eingesetzt wird. Zur Steuerung der Gaszusammensetzung im Calcinator wird eine variable Zufuhr von Tertiärluft vorgesehen, wobei über ein Drosselventil im Drehrohrofenabgasstrang der Sauerstoffgehalt und damit die Wirksamkeit der NOx-Reduktion geregelt werden.

Aufgabe der Erfindung ist es, die reduktive Umgebung in der gestuften Verbrennungsführung reaktiver zu machen.

Die erfindungsgemäße Aufgabe wird gelöst durch ein Verfahren nach Anspruch 1. Weitere vorteilhafte Ausgestaltungen sind in den Unteransprüchen zu Anspruch 1 angegeben.

Nach dem Gedanken der Erfindung ist es vorgesehen, den zur Herstellung von Kohlenmonoxid (CO) eingesetzten Verschwelungsreaktor mit einem engen Verfahrensparametersatz zu betreiben.

Ein wichtiger Verfahrensparameter ist die Luftzahl λ und die allotherme Prozessführung. Im Verschwelungsreaktor finden je nach Prozessführung nebeneinander unterschiedliche Verschwelungsarten statt. Bei einer Verbrennung des Sekundärbrennstoffs mit Sauerstoff (O₂) entsteht sowohl Kohlendioxid (CO₂) aus einer in der Regel exothermen Verbrennungsreaktion und es entsteht auch Kohlenmonoxid (CO) in einer in der Regel schwach exothermen bis endothermen Verbrennungsreaktion. Bei einem unterstöchiometrischen Verschwelungsbetrieb, bei dem weniger Luftsauerstoff (O₂) zur Verfügung gestellt wird, als es zur vollständigen Verbrennung des vorhandenen Sekundärbrennstoffs notwendig ist, stellen sich beide Verschwelungsarten nebeneinander ein. Die bei der Verbrennung zu Kohlendioxid (CO₂) entstehende Abwärme unterstützt die Verschwelung zu Kohlenmonoxid (CO) weiterer Sekundärbrennstoffanteile. Wiegen sich die Abwärme der exothermen Reaktion zu Kohlendioxid (CO₂) und die eher endotherme Reaktion zu Kohlenmonoxid (CO) gegeneinander aus, so findet ein autothermer Prozess statt. Unterliegt die Abwärme der Verbrennung zu Kohlendioxid (CO₂) der eher endothermen Reaktion zu Kohlenmonoxid (CO), so findet ein Übergang zu einer allothermen Prozessführung statt. Diese, zuletzt beschriebene Prozessführung ist unter dem Begriff einer "unterstöchiometrischen Betriebsweise" bekannt. Die darin noch restliche Verbrennung zu Kohlendioxid (CO₂) führt aber zu relativ unreaktiven Verschwelungsgasen als Pyrolysegase. Die bei der Erfindung gemachte Beobachtung ist, dass bei einer Vermeidung der Entstehung von Kohlendioxid (CO₂) die Verschwelungsgase reaktiver werden, was mit der Entstehung von kurzlebigen, radikalischen Gasbestandteilen wie auch kurzlebigen Kohlenwasserstoffen in den Verschwelungsgasen als Pyrolysegase erklärlich wäre. Es gibt hierzu eine nicht scharf definierbare Untergrenze der Luftzahl λ, ab der eine Verschwelung zu Kohlenmonoxid (CO) nur noch unter nicht unerheblicher Zufuhr von Prozesswärme stattfindet. Dabei ist die Luftzahl λ sehr gering, so dass keine Verbrennung zu (CO₂) mehr zu beobachten ist. Die Verschwelung mit einer derart geringen Luftzahl λ muss mit erheblicher Wärmeenergie unterhalten werden. Dabei darf die Luftzahl λ auch nicht einen unteren, kritischen Wert unterschreiten, denn bei einem zu starken Luftsauerstoff (O₂) -Mangel finden bei Präsenz starker Abwärme weitere Prozesse statt, bei der formell Wasser (H₂O) und auch Schwefel (S) aus den Sekundärbrennstoffen getrieben wird. Insofern gliche eine Verschwelung unter starker Wärmezufuhr und unter Abschluss von Luftsauerstoff (O₂) eher einer Verkohlung oder einer Verkoksung, die nicht zu gewünschten, reaktiven Verschwelungsgasen als Pyrolysegasen führt.

Als ideale Luftzahl λ, auch "Luftüberschusszahl λ" genannt, hat sich ein vorteilhaftes Intervall herausgestellt, wenn diese Luftzahl λ von 0,05 bis 0,3 bevorzugt von 0,1 bis 0,2 beträgt. Bei einem stark unterstöchiometrischen Betrieb des Verschwelungsreaktors mit einer Luftzahl λ von deutlich weniger als 1 ist gewährleistet, dass sich vermehrt Kohlenmonoxid (CO) bildet, wobei die Luftzahl λ durch Mischen der sauerstoffarmen Abluft eines Drehrohrofens zum Sintern von Zementklinker mit der einen atmosphärischen sauerstoffgehalt aufweisenden Abluft eines Klinkerkühlers eingestellt wird. Dabei ist wichtig, dass bei der Mischung die Temperatur der gemischten Abluft nicht zu gering wird.

Als ideales Temperaturfenster hat sich herausgestellt, wenn die Behandlungstemperatur der Sekundärbrennstoffe im Drehrohrofen ca. 800°C bis 1.200°C beträgt, wobei die Behandlungstemperatur innerhalb dieses Intervalls einstellbar ist durch die Zufuhr von Brennstoff pro Zeiteinheit, wobei bei einer Zunahme der Temperatur die Brennstoffzufuhr pro Zeiteinheit erhöht wird und bei einer Abnahme der Temperatur die die Brennstoffzufuhr pro Zeiteinheit verringert wird. Diese scheinbar verkehrte Regelung, mit mehr Brennstoff die Temperatur zu senken, hat ihren Ursprung in der Boudouard-Reaktion. Allerdings finden bei der erfindungsgemäßen Verschwelung von Sekundärbrennstoffen neben der Boudouard-Reaktion eine Vielzahl weiterer Reaktion statt, wie die Entstehung von kurzlebigen, radikalischen Gasbestandteilen, die Entstehung von reaktiven Kohlenwasserstoffen, das Entstehen von Waser und das Freisetzen von Schwefel. Wird die Verschwelungstemperatur zu hoch, so kann beispielsweise das abgespaltete Wasser (H₂O) in unerwünschter Weise zu Wasserstoff (H₂) und Sauerstoff (O₂) aufgespalten werden. Es Gegenstand der Erfindung, in dieser Mischung einer Vielzahl von parallel verlaufenden Verschwelungsreaktionen die Verfahrensparameter zu bestimmen, innerhalb derer die Nutzung der Verschwelungsgase zur weiteren Verwendung als Gas zur Denitrifikation effektiver wird. Um ohne Eingriff in die Verschwelungsreaktion selbst die Temperatur zu kontrollieren, kann es auch vorgesehen sein, Rohmehl in den Verschwelungsreaktor aufzugeben. Rohmehl enthält Kalk (CaCO₃), dass bei Erwärmung formell Kohlendioxid abspaltet (CO₂) und selbst zu gebranntem Kalk (CaO) umgewandelt wird. Diese Entsäuerungsreaktion ist stark endotherm und kann bei einer zu starken Zunahme der Verschwelungstemperatur dazu genutzt werden, die Verschwelungstemperatur zu verringern. Werden die nachfolgenden Verfahrensparameter eingehalten, so ist es auch möglich, durch Wahl der Umdrehungszahl des Verschwelungsreaktors die Temperatur zu kontrollieren. Um die Temperatur zu erhöhen, kann die Umdrehungszahl in einem Intervall von 0,3 bis 3 Umdrehungen pro Minute variiert werden und umgekehrt. Durch eine erhöhte Umdrehungszahl wird die Flächenfreisetzung von Sekundärbrennstoff pro Zeiteinheit erhöht und umgekehrt. Damit das langsamere und schnellere Umwälzen auch einen sicheren und vorhersagbaren Effekt auf die Temperatur im Verschwelungsofen hat, ist es vorteilhaft, wenn folgende Verfahrensparameter eingehalten werden.

Ein weiterer sehr vorteilhafter Verfahrensparameter ist daher die Korngröße des festen Sekundärbrennstoffes. Ist der Sekundärbrennstoff zu feinkörnig, so neigt der Sekundärbrennstoff zur schnellen Verbrennung. Es entsteht weniger Kohlenmonoxid und es entstehen auch keine oder nur wenig Pyrolysegase, die einen hohen Anteil an kurzlebigen Kohlenwasserstoffen beinhalten. Erfahrungen der Erfinder mit dem Betrieb von Verschwelungsreaktoren zeigen, dass gerade hohe Anteile von kurzlebigen Kohlenwasserstoffen in den Abgasen von Verschwelungsreaktoren, in denen sich die kurzlebigen Kohlenwasserstoffe durch Gasanalysen mit Raman- oder IR-Sonden detektieren lassen, neben Kohlenmonoxid die Stickoxid-Emission der Anlage deutlich verringern lassen. Ist die Korngröße zu groß, so entstehen im Verschwelungsreaktor Glutnester, die nur langsam abbrennen. Auch dabei entstehen weniger Pyrolysegase. Es wurde beobachtet, dass ein Maximum der Pyrolysegase dann entsteht, wenn die Sekundärbrennstoffe, wenn sie flach sind, wie Industriepappen, Dachpappen, Holzbretter, plattenförmige Industrieabfälle etwa eine Kantenlänge von 500 mm aufweisen und nicht größer sind. Eine untere Größe liegt bei etwa 100 mm bis 150 mm. Bei stückigen Brennstoffen, wie geschredderter Holzabfall, Holzschnitzeln, festen organischen Abfälle oder gebrochenen industriellen Abfällen sollten die Korngrößen etwa um die 80 mm aufweisen. Sind sie wesentlich kleiner, so findet ein zu starker Ausbrand statt. Sind sie größer, so bilden sich auch hier Glutnester. Eine untere Korngröße liegt bei etwa 15 mm bis 20 mm.

Um den Ausbrand der zu verschwelenden Sekundärbrennstoffe kontrollieren zu können, so dass neben Kohlenmonoxid (CO) ein hoher Anteil an kurzlebigen Kohlenwasserstoffen entsteht, hat es sich als vorteilhaft erwiesen, wenn die Sekundärbrennstoffe vor ihrem Einsatz konditioniert werden, so dass sie eine Feuchtigkeit der Sekundärbrennstoffe von weniger als 40% aufweisen. Dabei sollten die Sekundärbrennstoffe einen Kohlenstoffgehalt von mindestens 5% bis maximal 80% aufweisen. Weniger Kohlenstoffgehalt führt zur Bildung von anderen Stoffen bei der Verschwelung, jedoch zu wenig Kohlenmonoxid (CO). Ist der Kohlenstoffanteil höher, beispielsweise vorverkohltes Holz, so wird die Ausbildung von kurzlebigen Kohlenwasserstoffen verringert. Auch der Wasserstoffgehalt des Sekundärbrennstoffes ist wichtig. Es hat sich als vorteilhaft erwiesen, wenn der Sekundärbrennstoff einen Wasserstoffgehalt von 1% bis 15% aufweist. Höhere Konzentrationen von Wasserstoff (H₂) in dem Sekundärbrennstoff führt zu einer zu starken Wasserbildung in den Pyrolysegasen. Auch der mineralische Rohstoffanteil sollte weniger als 70% betragen. Bei landwirtschaftlichen Abfällen, oder auch bei industriellen Abfällen, wie zum bespiel bei der Verbrennung von Industriemüll mit Steinfasern oder Glasfasern kann der mineralische Anteil hoch werden. Ein hoher mineralischer Anteil führt zu einer starken Schlackenbildung, die schließlich ihren Weg in den Zementklinker findet und die Qualität des Zementklinkers erheblich beeinflussen kann. Die Summe der zuvor genannten Inhaltsstoffe kann bis zu 100% betragen. Ist die Summe weniger, so sind noch andere Begleitstoffe enthalten, wie zum Beispiel Schwefelverbindungen und Stickstoffverbindungen.

Auch die Verweilzeit des Sekundärbrennstoffes im Verschwelungsreaktor hat einen Einfluss auf die Qualität der zu erzeugenden Abgase. Als vorteilhaft hat sich erwiesen, wenn eine Verweilzeit der Sekundärbrennstoffe in dem Verschwelungsreaktor von 1 min bis 45 min eingestellt wird, die einstellbar ist durch einen Vorschubmechanismus. Bei einem Drehrohrofen ist der Vorschubmechanismus die Kombination aus dem Gefälle des Drehrohrofens und der Umdrehungsgeschwindigkeit des Ofens. dazu ist es vorteilhaft, wenn der Verschwelungsreaktor ein Drehrohrofen mit einem Anstellwinkel zwischen 1° und 8° aufweist und eine einstellbare Umdrehungsgeschwindigkeit hat.

Die Abgase des Verschwelungsreaktors werden schließlich in den Calcinator der Anlage zur Herstellung von Zementklinker eingeleitet, wo sie zur Reduktion der Stickoxide dienen.

Die Behandlung der mineralischen Rückstände nach Verschwelung kann unterschiedlich geregelt sein. Es ist möglich, dass die nach Ausbrand der Sekundärbrennstoffe zurückbleibenden mineralischen Bestandteile in die Drehrohrofeneinlaufkammer fallen. Dort verbinden sich die mineralischen Bestandteile mit dem Zementklinker. Bei organischen Abfällen handelt es sich meist um kalkhaltige oder silikathaltige Rückstände.

Die Erfindung wird anhand der folgenden Figuren näher erläutert. Es zeigt:
- Fig. 1: eine Anlage zur Herstellung von Zementklinker mit einem Verschwelungsreaktor,
- Fig. 2: eine Anlage zur Herstellung von Zementklinker mit einem Verschwelungsreaktor, wobei eine Schleuse zum Ausschleusen des mineralischen Verbrennungsrückstandes zwischen Verschwelungsreaktor und Calcinator angeordnet ist.

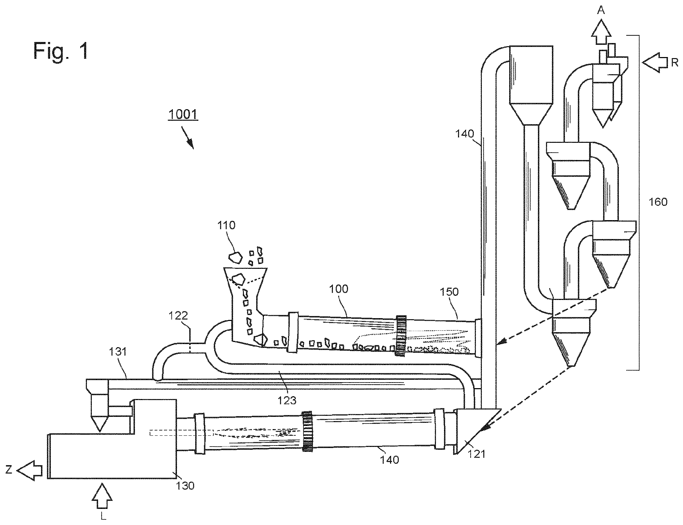

In **Figur 1** ist eine Anlage 1000 zur Herstellung von Zementklinker dargestellt. In dieser Anlage strömt ein Gasstrom beginnend bei der Kühlluft L am Klinkerkühler 130 einem Materialstrom beginnend beim Rohmehl, das am oberen Ende eines Zyklonwärmetauschers 160 in die Anlage 1000 aufgegeben wird. Die Kühlluft L kühlt im Klinkerkühler 130 den frischen Zementklinker Z ab und strömt als Tertiärluft in eine Tertiärluftleitung 131 und als Sekundärluft in den Drehrohrofen 120. Die heiße, atmosphärischen Sauerstoffgehalt aufweisende Tertiärluft strömt in den Calcinator 140, um dort eine Verbrennung von Brennstoff zu unterhalten. Die Sekundärluft verlässt den Drehrohrofen 120 mit einem sehr geringen Sauerstoffgehalt von ca. 2% - 4%. Von der Tertiärluftleitung 131 führt eine Leitung zum Verschwelungsreaktor 100, die über einen Schieber 122 gesteuert, eine bestimmte Menge an Tertiärluft in den Verschwelungsreaktor leitet. Des Weiteren führt eine Leitung 123 von der Drehrohrofeneinlaufkammer 121 zum Verschwelungsreaktor 100, wobei durch Mischen der atmosphärischen Sauerstoffgehalt aufweisenden Tertiärluft mit der sauerstoffarmen Drehrohrofenabluft in Leitung 123 der Sauerstoffgehalt im Verschwelungsreaktor 100 genau eingestellt werden kann. In der Korngröße eingestellter Sekundärbrennstoff 110 wird in den Verschwelungsreaktor 100 aufgegeben und dort unter kontrollierten Bedingungen verschwelt, so dass sich neben Kohlenmonoxid auch Pyrolysegase in Form von kurzlebigen Kohlenwasserstoffen bildet. Diese kurzlebigen Kohlenwasserstoffe als Verschwelungsabgase erhöhen die Reaktivität des Gases, so dass sich nitrose Gase (Stickoxide) im Calcinator 140 mit den Abgasen des Verschwelungsreaktors 100 verbinden und so die Stickoxide reduzieren. Die mit den Stickoxiden reagierten Abgase des Verschwelungsreaktors 100 folgen dem absteigenden Ast 141 des Calcinators 140 in den Zyklonwärmetauscher 160, wo sie als Abgase A die Anlage 1000 verlassen.

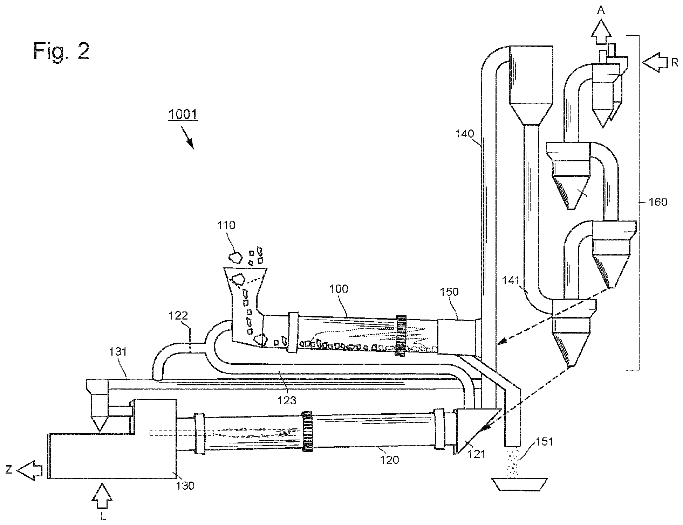

In **Figur 2** ist eine zur in Figur 1 dargestellten Anlage vergleichbare Anlage zur Herstellung von Zementklinker dargestellt. Im Unterschied zur Anlage aus Figur 1 ist hier zwischen dem Verschwelungsreaktor 100 und dem Calcinator 140 eine Schleuse 150 angeordnet, die über ein Fallrost im Inneren die nach der Verschwelung zurückbleibenden mineralischen Bestandteile 151 ausschleust, damit diese nicht ihren Weg in den zu sinternden Zementklinker Z finden.

### BEZUGSZEICHENLISTE

| | | | |
|---|---|---|---|
| 100 | Verschwelungsofen | 141 | absteigender Ast |
| 110 | Sekundärbrennstoff | 150 | Schleuse |
| 120 | Drehrohrofen | 151 | mineralische Bestandteile |
| 121 | Drehrohrofeneinlaufkammer | 160 | Zyklonwärmetauscher |
| 122 | Schieber | 1000 | Anlage |
| 123 | Verbindungsleitung Drehrohrofeneinlaufkammer - Verschwelungsreaktor | | |
| | | A | Abluft |
| | | L | Kühlluft |
| 124 | Schieber | R | Rohmehl |
| 130 | Klinkerkühler | Z | Zementklinker |
| 140 | Calcinator | | |

## Patentansprüche

1. Verfahren zum Betrieb eines Verschwelungsofens (100) in einer Anlage zur Herstellung von Zementklinker (1000), aufweisend
- mindestens einen Drehrohrofen (120) zum Sintern von Zementklinker,
- mindestens einen, dem Drehrohrofen (120) im Materialfluss nachgeschalteten Klinkerkühler (130) und
- mindestens einen Verschwelungsreaktor (100),
in welchem Verschwelungsreaktor (100) feste Sekundärbrennstoffe (110) zum Erzeugen von Kohlenmonoxid (CO) im Gleichstromverfahren verschwelt werden,
**gekennzeichnet durch**
- Verschwelung der festen Sekundärbrennstoffe (110) in der Abluft des Drehrohrofens (120), wobei
- die Luftzahl λ einen Wert zwischen λ = 0,05 und λ = 0,3, bevorzugt einen Wert zwischen λ = 0,1 und λ = 0,2 aufweist, und wobei
- die Luftzahl λ durch Mischen der sauerstoffarmen Abluft des Drehrohrofens (120) zum Sintern von Zementklinker mit der einen atmosphärischen sauerstoffgehalt aufweisenden Abluft des Klinkerkühlers (130) eingestellt wird.

2. Verfahren zum Betrieb eines Verschwelungsofens nach Anspruch 1,
**gekennzeichnet durch**
- eine Partikelgröße der Sekundärbrennstoffe (110) mit einer Kantenlänge von weniger als 500 mm, wenn es sich um flache Sekundärbrennstoffe (110) handelt, wie zerkleinerte Bretter, Holzpaletten-Bruch, Haushalts-Sperrmüll, scherben- oder scheibenförmige Industrieabfälle oder Pappen, und/oder
- eine Partikelgröße der Sekundärbrennstoffe (110) mit einer Kantenlänge von weniger 80 mm, wenn es sich um körnige Partikel handelt, wie Holzschnitzel, feste organische Abfälle, gebrochene industrielle Abfälle.

3. Verfahren zum Betrieb eines Verschwelungsofens nach einem der Ansprüche 1 oder 2,
**gekennzeichnet durch**
- eine Feuchtigkeit der Sekundärbrennstoffe (110) von weniger als 40%,
- einen Kohlenstoffgehalt der Sekundärbrennstoffe (110) von 5% bis 80%,
- einen Wasserstoffgehalt der Sekundärbrennstoffe (110) von 1% bis 15%,
- einen mineralischen Reststoffanteil der Sekundärbrennstoffe (110) von weniger als 70%,
wobei die Summe der zuvor genannten Inhaltsstoffe bis zu 100% betragen kann, wenn keine weiteren Begleitstoffe vorhanden sind.

4. Verfahren zum Betrieb eines Verschwelungsofens nach einem der Ansprüche 1 bis 3,
**gekennzeichnet durch**
- eine Behandlungstemperatur von 800°C bis 1.200°C, wobei die Behandlungstemperatur einstellbar ist durch die Zufuhr von Sekundärbrennstoff (110) pro Zeiteinheit, wobei
- bei einer Zunahme der Temperatur die Zufuhr von Sekundärbrennstoff (110) pro Zeiteinheit erhöht wird und
- bei einer Abnahme der Temperatur die die Zufuhr von Sekundärbrennstoff (110) pro Zeiteinheit verringert wird.

5. Verfahren zum Betrieb eines Verschwelungsofens nach einem der Ansprüche 1 bis 4,
**gekennzeichnet durch**
eine Verweilzeit der Sekundärbrennstoffe (110) in dem Verschwelungsreaktor (100) von 1 min bis 45 min, einstellbar durch einen Vorschubmechanismus.

6. Verfahren zum Betrieb eines Verschwelungsofens nach einem der Ansprüche 1 bis 5,
**dadurch gekennzeichnet, dass**
der Verschwelungsreaktor (100) ein Drehrohrofen mit einem Anstellwinkel zwischen 1° und 8° ist und eine einstellbare Umdrehungsgeschwindigkeit aufweist.

7. Verfahren zum Betrieb eines Verschwelungsofens nach einem der Ansprüche 1 bis 6,
**dadurch gekennzeichnet, dass**
sich der Verschwelungsreaktor(100) unmittelbar oberhalb des Drehrohrofen (120) befindet.

8. Verfahren zum Betrieb eines Verschwelungsofens nach einem der Ansprüche 1 bis 7,
**dadurch gekennzeichnet, dass**
die Abgase des Verschwelungsofens (100) in einen Calcinator (140) der Anlage (1000) zur Herstellung von Zementklinker eingeleitet werden.

9. Verfahren zum Betrieb eines Verschwelungsofens nach einem der Ansprüche 1 bis 8,
**dadurch gekennzeichnet, dass**
die nach Ausbrand der Sekundärbrennstoffe (110) zurückbleibenden mineralischen Bestandteile durch eine Drehrohrofeneinlaufkammer (121) in den Drehrohrofen (120) fallen.

10. Verfahren zum Betrieb eines Verschwelungsofens nach einem der Ansprüche 1 bis 9,
**dadurch gekennzeichnet, dass**
die nach Ausbrand der Sekundärbrennstoffe (110) zurückbleibenden mineralischen Bestandteile (151) durch eine Schleuse (150) ausgeschleust werden.

## Claims

1. Method of operating a carbonizing furnace (100) in a plant for production of cement clinker (1000), comprising
- at least one rotary kiln (120) for sintering cement clinker,
- at least one clinker cooler (130) downstream of the rotary kiln (120) in the material flow and
- at least one carbonizing reactor (100),
in which carbonizing reactor (100) solid secondary fuels (110) are carbonized for production of carbon monoxide (CO) by the direct current method,
**characterized by**
- carbonizing of the solid secondary fuels (110) in the exhaust air from the rotary kiln (120), where
- the air ratio λ has a value between λ = 0.05 and λ = 0.3, preferably a value between λ = 0.1 and λ = 0.2, and where
- the air ratio λ is adjusted by mixing the low-oxygen exhaust air from the rotary kiln (120) for sintering of cement clinker with the exhaust air from the clinker cooler (130) having an atmospheric oxygen content.

2. Method of operating a carbonizing furnace according to Claim 1,
**characterized by**
- a particle size of secondary fuels (110) with an edge length of less than 500 mm in the case of planar secondary fuels (110), such as crushed boards, crushed wood pallets, bulky household waste, industrial waste or cardboard in shredded or sheet form, and/or
- a particle size of secondary fuels (110) with an edge length of less than 80 mm in the case of granular particles, such as woodchips, solid organic waste, crushed industrial waste.

3. Method of operating a carbonizing furnace according to either of Claims 1 and 2,
**characterized by**
- a moisture content of the secondary fuels (110) of less than 40%,
- a carbon content of the secondary fuels (110) of 5% to 80%,
- a hydrogen content of the secondary fuels (110) of 1% to 15%,
- a mineral residual fraction of the secondary fuels (110) of less than 70%,
where the sum total of the aforementioned ingredients may be up to 100% if no other accompanying substances are present.

4. Method of operating a carbonizing furnace according to any of Claims 1 to 3,
**characterized by**
- a treatment temperature of 800°C to 1200°C, wherein the treatment temperature is adjustable by the supply of secondary fuel (110) per unit of time, wherein
- in the case of an increase in temperature, the supply of secondary fuel (110) per unit of time is increased, and
- in the case of a decrease in temperature, the supply of secondary fuel (110) per unit of time is reduced.

5. Method of operating a carbonizing furnace according to any of Claims 1 to 4,
**characterized by**
a dwell time of the secondary fuels (110) in the carbonizing reactor (100) of 1 min to 45 min, adjustable by a feed mechanism.

6. Method of operating a carbonizing furnace according to any of Claims 1 to 5,
**characterized in that**
the carbonizing reactor (100) is a rotary kiln with a setting angle of between 1° and 8° and has an adjustable speed of rotation.

7. Method of operating a carbonizing furnace according to any of Claims 1 to 6,
**characterized in that**
the carbonizing reactor (100) is immediately above the rotary kiln (120).

8. Method of operating a carbonizing furnace according to any of Claims 1 to 7,
**characterized in that**
the offgases from the carbonizing furnace (100) are introduced into a calciner (140) of the plant (1000) for production of cement clinker.

9. Method of operating a carbonizing furnace according to any of Claims 1 to 8,
**characterized in that**
the mineral components that remain after the secondary fuels (110) have burned to completion fall into the rotary kiln (120) through a rotary kiln inlet chamber (121).

10. Method of operating a carbonizing furnace according to any of Claims 1 to 9,
**characterized in that**
the mineral components (151) that remain after the secondary fuels (110) have burned to completion are discharged through a lock (150).

## Revendications

1. Procédé d'exploitation d'un four de carbonisation (100) dans une installation de fabrication de clinker de ciment (1000), comprenant :
- au moins un four rotatif (120) destiné au frittage de clinker de ciment,
- au moins un refroidisseur de clinker (130), disposé en aval du four rotatif (120) dans le flux de matière, et
- au moins un réacteur de carbonisation (100),
dans lequel réacteur de carbonisation (100) des combustibles secondaires solides (110) sont carbonisés selon un procédé à co-courant afin de produire du monoxyde de carbone (CO),
**caractérisé par**
- la carbonisation des combustibles secondaires solides (110) dans les gaz résiduaires du four rotatif (120),
- le coefficient d'air λ présentant une valeur comprise entre λ = 0,05 et λ = 0,3, de préférence une valeur comprise entre λ = 0,1 et λ = 0,2, et
- le coefficient d'air λ étant réglé par mélange des gaz résiduaires pauvres en oxygène du four rotatif (120) destiné au frittage de clinker de ciment avec les gaz résiduaires du refroidisseur de clinker (130) présentant une teneur en oxygène atmosphérique.

2. Procédé d'exploitation d'un four de carbonisation selon la revendication 1,
**caractérisé par**
- une taille de particules des combustibles secondaires (110), avec une longueur d'arête inférieure à 500 mm lorsqu'il s'agit de combustibles secondaires plats (110), tels que des planches broyées, des débris de palettes en bois, des encombrants ménagers, des déchets industriels en forme de tessons ou de disques ou des cartons, et/ou
- une taille de particules des combustibles secondaires (110), avec une longueur d'arête inférieure à 80 mm lorsqu'il s'agit de particules granulaires, telles que des copeaux de bois, des déchets organiques solides, des déchets industriels concassés.

3. Procédé d'exploitation d'un four de carbonisation selon l'une des revendications 1 ou 2,
**caractérisé par**
- une humidité des combustibles secondaires (110) inférieure à 40 %,
- une teneur en carbone des combustibles secondaires (110) de 5 % à 80 %,
- une teneur en hydrogène des combustibles secondaires (110) de 1 % à 15 %,
- une teneur en résidus minéraux des combustibles secondaires (110) inférieure à 70 %,
la somme des constituants précités pouvant atteindre 100 % lorsqu'aucun autre constituant secondaire n'est présent.

4. Procédé d'exploitation d'un four de carbonisation selon l'une des revendications 1 à 3,
**caractérisé par**
- une température de traitement de 800 °C à 1 200 °C, la température de traitement étant réglable par l'alimentation en combustible secondaire (110) par unité de temps,
- en cas d'augmentation de la température, l'alimentation en combustible secondaire (110) par unité de temps étant augmentée, et
- en cas de diminution de la température, l'alimentation en combustible secondaire (110) par unité de temps étant réduite.

5. Procédé d'exploitation d'un four de carbonisation selon l'une des revendications 1 à 4,
**caractérisé par**
une durée de séjour des combustibles secondaires (110) dans le réacteur de carbonisation (100) de 1 min à 45 min, réglable au moyen d'un mécanisme d'avance.

6. Procédé d'exploitation d'un four de carbonisation selon l'une des revendications 1 à 5,
**caractérisé en ce que**
le réacteur de carbonisation (100) est un four rotatif présentant un angle d'inclinaison compris entre 1° et 8° et une vitesse de rotation réglable.

7. Procédé d'exploitation d'un four de carbonisation selon l'une des revendications 1 à 6,
**caractérisé en ce que**
le réacteur de carbonisation (100) est disposé directement au-dessus du four rotatif (120).

8. Procédé d'exploitation d'un four de carbonisation selon l'une des revendications 1 à 7,
**caractérisé en ce que**
les gaz d'échappement du four de carbonisation (100) sont introduits dans un calcinateur (140) de l'installation (1000) de fabrication de clinker de ciment.

9. Procédé d'exploitation d'un four de carbonisation selon l'une des revendications 1 à 8, **caractérisé en ce que**
les constituants minéraux subsistant après la combustion complète des combustibles secondaires (110) tombent dans le four rotatif (120) à travers une chambre d'entrée (121) du four rotatif.

10. Procédé d'exploitation d'un four de carbonisation selon l'une des revendications 1 à 9,
**caractérisé en ce que**
les constituants minéraux (151) subsistant après la combustion complète des combustibles secondaires (110) sont évacués par un sas (150).
